# EUROPEAN PATENT APPLICATION

(11) **EP 3 145 017 A1**
(43) Date of publication of application: **22.03.2017**
(21) Application number: 15793544.6
(22) Date of filing: 12.05.2015
(51) Int. Cl.: H01M 8/24, H01M 8/04, H01M 8/06, H01M 8/12, H01M 8/0612, H01M 8/0662, H01M 8/00, H01M 8/04014, H01M 8/2483, H01M 8/2432, H01M 8/124

(54) **FUEL CELL**

(30) Priority: 13.05.2014 JP 2014099156
(71) Applicant: Sumitomo Precision Products Co., Ltd., Amagasaki-shi, Hyogo 660-0891 (JP)
(72) Inventor: UWANI Hiroyuki, Amagasaki-shi Hyogo 660-0891 (JP)
(74) Representative: Blodig, Wolfgang
(86) International application number: PCT/JP2015/063549
(87) International publication number: WO 2015/174386

(57) **Abstract**

In a fuel cell provided herein, the flow resistance of oxidant gas and that of oxidant off-gas in a cell stack are low to effectively reduce risk of gas leakage and risk of resultant destructive damage. The fuel cell comprises a cell stack 10 configured by stacking an anode plate 12 and a cathode plate 13 alternately while holding a cell 11 between central sections of the anode plate 12 and the cathode plate 13 and holding a cell holder 19 between peripheral sections of the anode plate 12 and the cathode plate 13. A fuel-containing gas intake manifold 10F is formed integrally on one of two sides of the cell stack 10 facing each other. A fuel off-gas exhaust manifold 10G is formed integrally on the other of these two sides. An oxidant gas intake manifold 10H is formed integrally on one of different two sides facing each other. A manifold is not formed on the other of the different two sides to form an exhaust port 15b on a lateral side of the cell stack 10 through which oxidant off-gas is released from a cathode side of the cell 11 in each layer.

## Description

### Technical Field

This invention relates to a fuel cell including a flat plate-like cell stack configured by stacking a flat plate-like anode plate and a flat plate-like cathode plate alternately while holding a flat plate-like cell between central sections of the anode plate and the cathode plate, and holding a flat plate-like cell holder between peripheral sections of the anode plate and the cathode plate. This invention particularly relates to a fuel cell including a cell stack where the flat plate-like cell has a rectangular square plate shape. More specifically, this invention relates to a fuel cell including a manifold-integrated cell stack where an intake manifold and an exhaust manifold are formed integrally in a stacking direction of the peripheral sections.

### Background Art

A fuel cell includes a solid oxide fuel cell and a solid polymer fuel cell, etc. categorized by the type of an electrolyte to be used. Attention has been focused particularly on a solid oxide fuel cell having a high power-generating efficiency. According to one typical form of a solid oxide fuel cell, a flat plate-like cell stack forms a principal part of the solid oxide fuel cell. The cell stack is configured by stacking a flat plate-like anode plate and a flat plate-like cathode plate alternately while holding a flat plate-like cell between central sections of the anode plate and the cathode plate, and holding a flat plate-like cell holder between peripheral sections of the anode plate and the cathode plate. The cell has a flat plate-like solid oxide, an anode connected to one surface of the solid oxide, and a cathode connected to an opposite surface of the solid oxide. The flat plate-like cell stack is roughly divided into a square-plate cell stack and a round-plate cell stack in a manner that depends on the flat plate-like shape of the cell. Specifically, a cell stack using a cell formed of a rectangular square plate is a square-plate cell stack (patent literature 1), and a cell stack using a round-plate cell is a round-plate cell stack (patent literature 2).

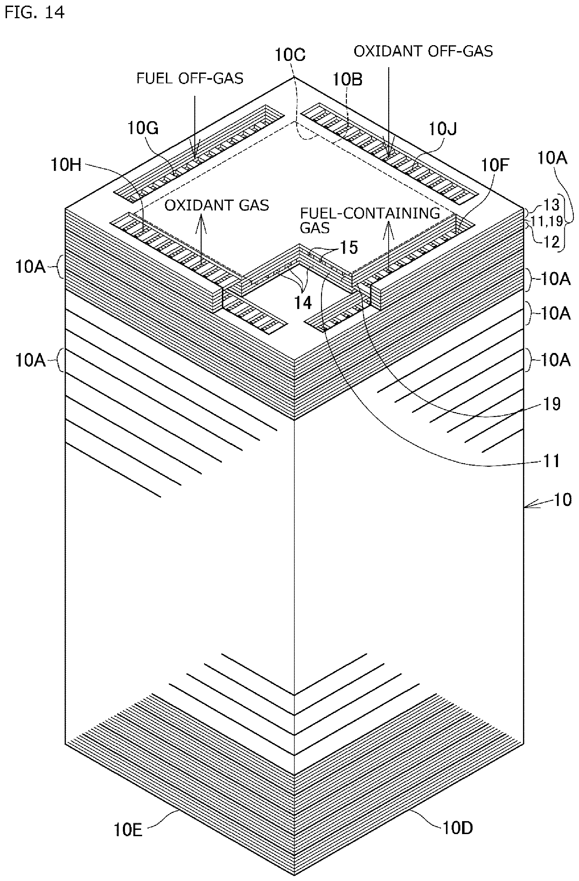

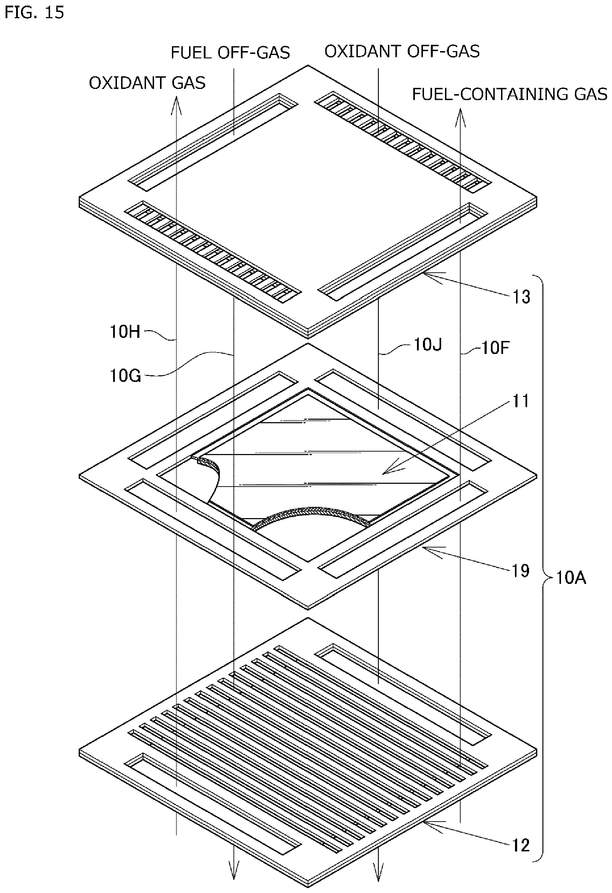

Figs. 14 and 15 show a typical structure of the square-plate cell stack. A cell stack 10 shown in these drawings is a square-columnar stack configured by stacking a plurality of square-plate power-generating elements 10A repeatedly, with each having a power-generating function. Each power-generating element 10A is a flat plate-like stack configured by stacking a flat plate-like rectangular (here, regular square) anode plate 12 and a flat plate-like rectangular (here, regular square) cathode plate 13 while holding a flat plate-like rectangular (here, regular square) cell 11 between central sections of the anode plate 12 and the cathode plate 13 and holding a flat plate-like and square-frame cell holder 19 between peripheral sections of the anode plate 12 and the cathode plate 13.

The cell 11 is a rectangular thin stack having a flat plate-like solid oxide, an anode connected to one surface (surface closer to the anode plate 12) of the solid oxide, and a cathode connected to an opposite surface (surface closer to the cathode plate 13) of the solid oxide. The cell 11 is formed into a size smaller than the anode plate 12 and the cathode plate 13 on the opposite surfaces. Thus, a central section of the cell stack 10 functions as a square-columnar cell section 10B where the anode plate 12 and the cathode plate 13 are stacked alternately while the cell 11 is caught between the anode plate 12 and the cathode plate 13. A peripheral section of the cell stack 10 surrounding the cell section 10B functions as a square-tubular plate-stacked section 10C where the anode plate 12 and the cathode plate 13 are stacked alternately while the square-frame cell holder 19 is caught between the anode plate 12 and the cathode plate 13.

In the cell section 10B, a fuel-containing gas channel 14 for passing fuel-containing gas between two sides of the cell 11 facing each other and along the anode is formed on an anode side of each cell 11 to be positioned between the cell 11 and the anode plate 12. An oxidant gas channel 15 for passing oxidant gas between different two sides of the cell 11 facing each other and along the cathode is formed on a cathode side of each cell 11 to be positioned between the cell 11 and the cathode plate 13. Specifically, the cell stack 10 described herein employs a perpendicular-flow system where a gas passing direction in the fuel-containing gas channel 14 and a gas passing direction in the oxidant gas channel 15 are perpendicular to each other.

In the square-tubular plate-stacked section 10C surrounding the cell section 10B, for supply of fuel-containing gas to the fuel-containing gas channel 14 in each layer in the cell section 10B, a fuel-containing gas intake manifold 10F is formed integrally at one of the two sides facing each other to penetrate the cell stack 10 in a stacking direction. For release of fuel off-gas from the fuel-containing gas channel 14 in each layer in the cell section 10B to the outside of the cell stack 10, a fuel off-gas exhaust manifold 10G is formed integrally at the other of the two sides to penetrate the cell stack in the stacking direction.

For supply of oxidant gas to the oxidant gas channel 15 in each layer in the cell section 10B, an oxidant gas intake manifold 10H is formed integrally at one of the different two sides facing each other to penetrate the cell stack 10 in the stacking direction. For release of oxidant off-gas from the oxidant gas channel 15 in each layer in the cell section 10B to the outside of the cell stack 10, an oxidant off-gas exhaust manifold 10J is formed integrally at the other of the different two sides to penetrate the cell stack 10 in the stacking direction.

During running for power generation, hydrogen-rich fuel-containing gas is supplied to the fuel-containing gas intake manifold 10F from below, and then flows in a distributed manner into the fuel-containing gas channel 14 in the cell 10A in each layer. Fuel off-gas from the fuel-containing gas channel 14 in the cell 10A in each layer gathers at the fuel off-gas exhaust manifold 10G and is released downwardly. Oxidant gas such as air is supplied to the oxidant gas intake manifold 10H from below and then flows in a distributed manner into the oxidant gas channel 15 in the cell 10A in each layer. Oxidant off-gas from the oxidant gas channel 15 in the cell 10A in each layer gathers at the oxidant off-gas exhaust manifold 10J and is released downwardly. In this way, a power-generating reaction occurs in the cell 10A in each layer.

In this description, gases released from the fuel-containing gas channel 14 in the cell 10A are collectively called fuel off-gas irrespective of whether these gases are released during running of the cell stack 10, before the running, or after the running. Gases released from the oxidant gas channel 15 in the cell 10A are collectively called oxidant off-gas irrespective of whether these gases are released during running of the cell stack 10, before the running, or after the running.

In a square-plate cell stack belonging to the same type as the aforementioned cell stack and configured by stacking square-plate members, by employing the aforementioned perpendicular-flow system where two gas passing directions of two types of gases are perpendicular to each other, an intake manifold and an exhaust manifold for each of the two types of gases can be formed integrally at a corresponding one of the four sides into substantially the same width as a corresponding one of the channels for the two types of gases (fuel-containing gas channel 14 and oxidant gas channel 15). This has an advantage compared to a round-plate cell stack configured by stacking round-plate members in that the scale of the stack can be reduced and flow resistances of the two types of gases can be reduced. This is for the following reason. In the case of the round-plate cell stack, for passing the two types of gases from a central section toward an outer circumferential section of a round-plate cell, manifolds for both of these gases, particularly intake manifolds for both of these gases should be formed within the central section of the cell stack. However, it is difficult to form such intake manifolds integrally at the central section of the cell stack, so that these intake manifolds should be formed separately outside the cell stack.

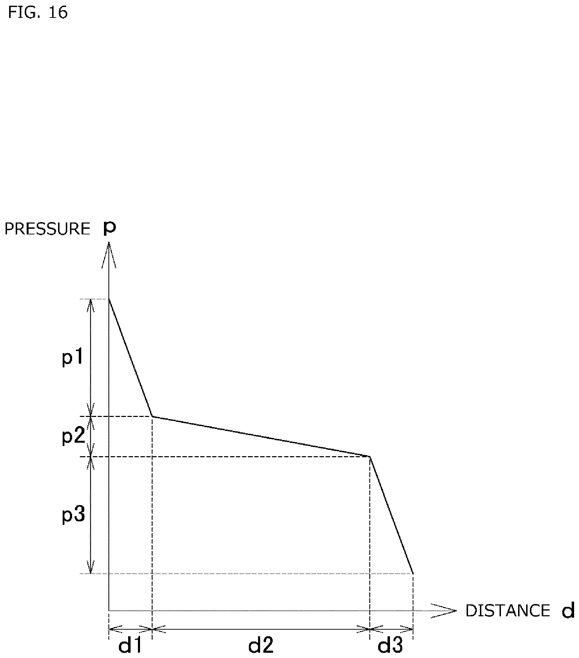

However, even in a manifold-integrated square-plate cell stack, flow resistance will be low necessarily, particularly of oxidant gas and oxidant off-gas for the following reason. Fig. 16 shows a pressure change observed in a passing direction of oxidant gas and oxidant off-gas. A sign d1 shows a distance from the oxidant gas intake manifold 10H to an inlet of the oxidant gas channel 15 and a sign p1 shows pressure loss occurring in this distance. A sign d2 shows a distance from the inlet to an outlet of the oxidant gas channel 15 and a sign p2 shows pressure loss occurring in this distance. A sign d3 shows a distance from the outlet of the oxidant gas channel 15 to the oxidant off-gas exhaust manifold 19, and a sign p3 shows pressure loss occurring in this distance.

In the case of a flat plate-like cell stack for a solid oxide fuel cell, a gas seal should be provided around the cell section 10B, and between flat plates so as to avoid gas leakage. The gas seal is generally formed of a glass seal member of not so high pressure resistance of about some kilopascals. Meanwhile, the pressure of oxidant gas is high as its flow rate is considerably higher than that of fuel-containing gas. This causes risk of a sealing failure in the oxidant gas channel 15 in the cell section and resultant leakage of the oxidant gas. Leakage of the oxidant gas causes a crack in the cell due to lack of the fuel-containing gas in the cell section. This may cause risk for progression to destructive breakdown. Specifically, even a square-plate cell stack of low gas flow resistance still has risk of gas leakage caused by gas pressure, particularly by the level of pressure of the oxidant gas, and resultant destructive damage.

### Prior Art Literatures

### Patent Literatures

Patent Literature 1: Japanese Patent Application Publication No. 2013-257973
Patent Literature 2: Japanese Patent Application Publication No. 2010-218873

### Summary of Invention

### Problem to be Solved by Invention

The objective of this invention is to provide a fuel cell including a square-plate cell stack having low gas flow resistance, and in which risk of gas leakage and risk of resultant destructive damage are reduced effectively by reducing the flow resistance of oxidant gas and that of oxidant off-gas further.

### Means of Solving Problem

To achieve this objective, a fuel cell of this invention comprises a cell stack configured by stacking a flat plate-like anode plate and a flat plate-like cathode plate alternately while holding a cell between central sections of the anode plate and the cathode plate, and holding a flat plate-like cell holder between peripheral sections of the anode plate and the cathode plate. The cell has a rectangular flat plate-like shape with one main surface to which an anode is connected and an opposite main surface to which a cathode is connected.

A fuel-containing gas channel and an oxidant gas channel are formed on an anode side and a cathode side respectively of each cell. The fuel-containing gas channel is formed for passing fuel-containing gas along the anode of each cell in the cell stack. The oxidant gas channel is formed for passing oxidant gas along the cathode of each cell in the cell stack.

A manifold is formed at each of an upstream side of the fuel-containing gas channel, a downstream side of the fuel-containing gas channel, and an upstream side of the oxidant gas channel to form a manifold-integrated structure.

The manifold on the upstream side of the fuel-containing gas channel is a fuel-containing gas intake manifold that penetrates a plate-stacked section in a stacking direction where the anode plate and the cathode plate are stacked while an insulating plate is caught between the anode plate and the cathode plate and communicates with an upstream end of each fuel-containing gas channel in the cell stack.

The manifold on the downstream side of the fuel-containing gas channel is a fuel off-gas exhaust manifold that penetrates the plate-stacked section in the stacking direction and communicates with a downstream end of each fuel-containing gas channel in the cell stack.

The manifold on the upstream side of the oxidant gas channel is an oxidant gas intake manifold that penetrates the plate-stacked section in the stacking direction and communicates with an upstream end of each oxidant gas channel in the cell stack.

A downstream side of the oxidant gas channel in each cell has an open structure in which a downstream end of each oxidant gas channel in the cell stack is opened as an oxidant off-gas exhaust port to an outer peripheral surface of the cell stack and oxidant off-gas is released directly to the outside of the cell stack through the downstream end of the oxidant gas channel.

The fuel cell of this invention uses the square-plate cell stack that uses the cell having a rectangular flat plate-like shape. The fuel-containing gas intake manifold, the fuel off-gas exhaust manifold, and the oxidant gas intake manifold are formed integrally with the cell stack. Thus, the fuel cell inherently has a compact size and the flow resistance of each gas is low in the fuel cell. Additionally, regarding the oxidant off-gas released from the oxidant gas channel, the downstream end of the oxidant gas channel is opened as the oxidant off-gas exhaust port at the outer peripheral surface of the cell stack, and the oxidant off-gas released from the oxidant gas channel does not pass through a manifold. This facilitates further size reduction and reduction in pressure loss, thereby reducing gas flow resistance. The oxidant gas is generally air. As seen from this, the oxidant gas is a safe gas even in the form of oxidant off-gas. Thus, releasing the oxidant off-gas directly to the outside of the cell stack does not cause any problems relating to safety.

The oxidant off-gas exhaust port formed at the outer peripheral surface of the cell stack can be configured to a contact stack housing space housing the cell stack and through which the oxidant off-gas can be released directly into the stack housing space from the downstream end of the oxidant gas channel. According to this configuration, the oxidant off-gas released through the oxidant off-gas exhaust port stays temporarily in the stack housing space to prevent diffusion of the oxidant off-gas.

In this case, the cell stack can be disposed in a stack cover covering the cell stack, and internal space of the stack cover can function as the stack housing space. By doing so, the stack housing space can be formed by using the stack cover to achieve a simple structure.

A relationship between a gas passing direction in the fuel-containing gas channel and a gas passing direction in the oxidant gas channel can be determined as a cross-flow system where these channels cross each other or a counterflow system where each of these channels extends from one side toward a side facing the one side. In the case of the cross-flow system, each manifold is formed at the plate-stacked section on a corresponding side of each cell. This increases the size of each manifold to reduce gas flow resistance. In the case of the counterflow system, the fuel-containing gas intake manifold and the oxidant off-gas exhaust port are formed at one of the sides facing each other, whereas the fuel off-gas exhaust manifold and the oxidant gas intake manifold are formed at the other of these sides. In this way, the scale of the cell stack can be reduced.

If the cross-flow system is employed while the cell stack is formed into a rectangular (quadrangular) shape corresponding to the shape of the cell in the cell stack in a view of the cell stack taken from above and from one end side of the stacking direction, the fuel-containing gas intake manifold, the fuel off-gas exhaust manifold, and the oxidant gas intake manifold are formed at corresponding three sides of the rectangular shape, and the oxidant off-gas exhaust port is formed at a lateral side of the remaining one side of the rectangular shape. In this way, each side can be fully utilized.

The planar shape of the cell in the cell stack is required to be rectangular. Meanwhile, the planar shape of the cell holder holding the cell is not required to be rectangular (quadrangular) but it can be round or polygonal, for example.

The fuel cell of this invention can comprise a reformer disposed outside the stack housing space for generating hydrogen-rich fuel-containing gas from raw fuel gas. The reformer can use an off-gas combustor as a heating source that causes combustion of a mixture of the fuel off-gas released from the fuel off-gas exhaust manifold of the cell stack and the oxidant off-gas released from the oxidant off-gas exhaust port or the stack housing space. In this case, using combustion exhaust gas released from the off-gas combustor as a heating medium in the reformer is efficient and preferable.

The reformer can be disposed in the vicinity of the stack cover. Thus, during running of the cell stack for power generation, the stack cover is heated from outside with radiant heat from the reformer. If the oxidant off-gas is released directly from the oxidant off-gas exhaust port of the cell stack into the stack housing space inside the stack cover, the stack cover is heated from inside with the oxidant off-gas at a high temperature. If a part of the stack cover where the stack cover is heated from inside and a part of the stack cover where the stack cover is heated from outside overlap each other, imbalance increases in a temperature distribution of the stack cover. This causes risk in that power-generating efficiency of the cell stack in the stack cover might be affected adversely. This risk can be avoided effectively by placing the reformer on a side different from a side where the oxidant off-gas exhaust port is formed with respect to a reference line perpendicular to a center line passing through the center of the cell stack in the stacking direction and perpendicular to a gas passing direction in the oxidant gas channel.

### Advantageous Effects of Invention

The fuel cell of this invention uses the square-plate cell stack that uses the cell having a rectangular flat plate-like shape. The fuel-containing gas intake manifold, the fuel off-gas exhaust manifold, and the oxidant gas intake manifold are formed integrally with the cell stack. Thus, the fuel cell inherently has a compact size, and the flow resistance of each gas is low in the fuel cell. Additionally, regarding the oxidant off-gas released from the oxidant gas channel, the downstream end of the oxidant gas channel is opened as the oxidant off-gas exhaust port at the outer peripheral surface of the cell stack and the oxidant off-gas released from the oxidant gas channel does not pass through a manifold. This facilitates further size reduction and reduction in pressure loss, thereby reducing gas flow resistance. In this way, risk of gas leakage and risk of resultant destructive damage can be reduced effectively while safety is not impaired.

### Brief Description of Drawings

Fig. 1 is a perspective view showing an entire structure of a cell stack in a fuel cell according to an embodiment of this invention.
Fig. 2 is a perspective view of the cell stack as viewed from a back side thereof.
Fig. 3 is an exploded perspective view showing the structure of a cell element in the cell stack.
Fig. 4 is a sectional view showing the structure of the cell element.
Fig. 5 is a sectional view of the cell element taken from a different angle.
Fig. 6 is an exploded perspective view showing the structure of a cell, that of a cell holder, and that of an anode plate in the cell element.

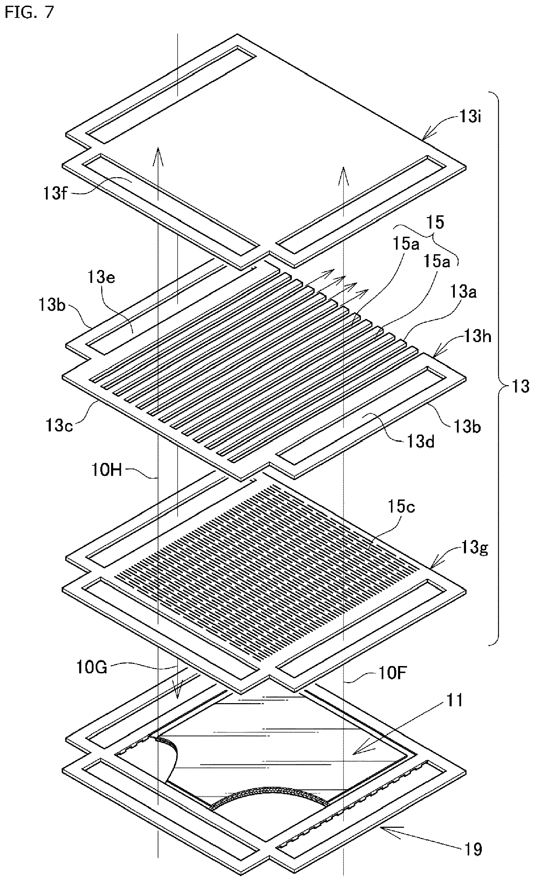

Fig. 7 is an exploded perspective view showing the structure of a cathode plate in the cell element.
Fig. 8 is a partial plan view of a slit plate of the cathode plate.
Fig. 9 is a schematic plan view showing a cell stack employing a counterflow system.
Fig. 10 is a partial-cutaway perspective view showing a state where the cell stack is housed in a stack cover.
Fig. 11 is a schematic plan view of the fuel cell according to the embodiment of this invention.
Fig. 12 is a schematic elevational view of the fuel cell.
Fig. 13 is a configuration view of the fuel cell.
Fig. 14 shows an entire structure of a conventional cell stack.
Fig. 15 is an exploded perspective view showing the structure of a cell element in the conventional cell stack.
Fig. 16 is a graph showing the flow resistance of oxidant gas and that of oxidant off-gas in the conventional cell stack.
Fig. 17 is a graph showing the flow resistance of oxidant gas and that of oxidant off-gas in the cell stack in the fuel cell according to the embodiment of this invention.

### Embodiment for Carrying Out Invention

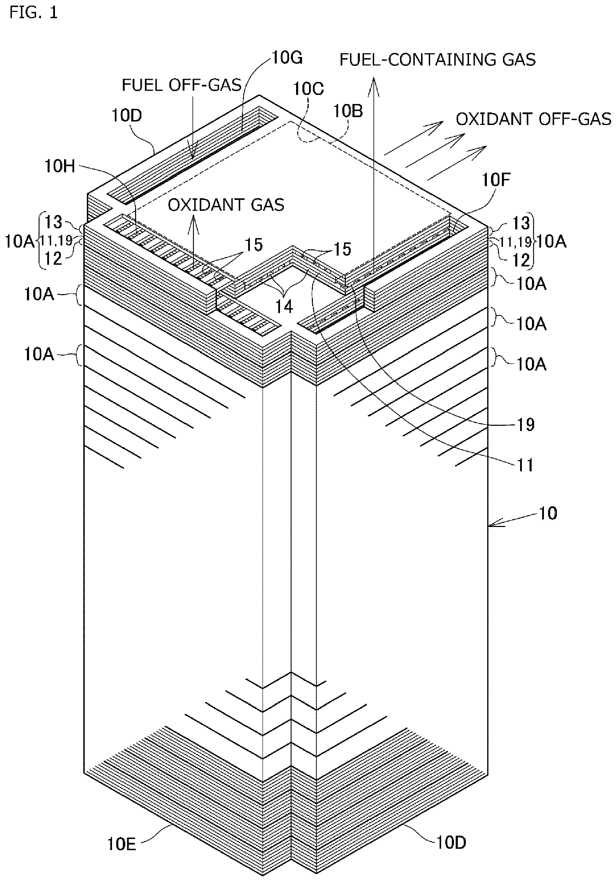

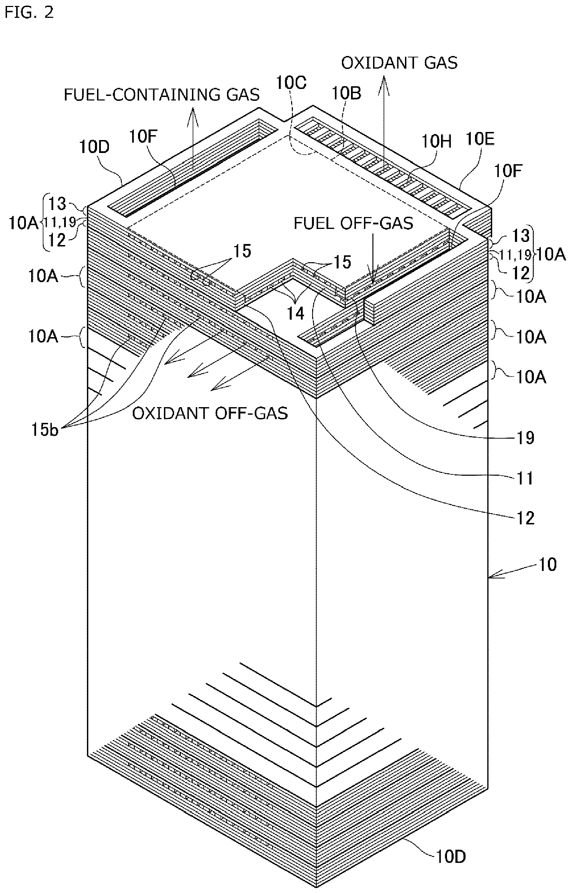

An embodiment of this invention is described below by referring to the drawings. A fuel cell of this embodiment is a square-plate solid oxide fuel cell (SOFC). As shown in Figs. 1 and 2, this fuel cell includes a square-columnar cell stack 10 as a principal component thereof configured by stacking a plurality of flat plate-like power-generating elements 10A repeatedly, each having a power-generating function.

The cell stack 10 is entirely formed into a square-columnar shape. Strictly, the cell stack 10 includes a quadrangular-columnar body part having a rectangular (here, regular square) cross section, two first projecting parts 10D projecting outwardly from two sides of the body part facing each other, and one second projecting part 10E projecting outwardly from one of the different sides of the body part. Specifically, the first projecting parts 10D project outwardly in a rectangular parallelepiped shape from the entire regions in a stacking direction of the two sides facing each other belonging to the four sides of the body part. The second projecting part 10E projects outwardly in a rectangular parallelepiped shape from the entire region in the stacking direction of one side caught between these two sides. Each of the projecting parts is formed into a flat rectangular parallelepiped having a horizontal width substantially the same as that of the body part while projecting outwardly by an amount smaller than its horizontal width.

For supply of fuel-containing gas to each power-generating element 10A in the cell stack 10, a fuel-containing gas intake manifold 10F is formed at one of the two first projecting parts 10D to penetrate the cell stack 10 in the stacking direction. A fuel off-gas exhaust manifold 10G is formed at the other of the two first projecting parts 10D to penetrate the cell stack 10 in the stacking direction. For supply of oxidant gas to each power-generating element 10A, an oxidant gas intake manifold 10H is formed at the one second projecting part 10E to penetrate the cell stack 10 in the stacking direction. Each of these manifolds is a vertical hole having a horizontally-long and flat rectangular parallelepiped shape smaller than the rectangular parallelepiped shape of the projecting part where this manifold is formed.

Fuel-containing gas flows into an anode side of each power-generating element 10A while passing from bottom to top through the fuel-containing gas intake manifold 10F. After passing through the anode side along an anode, the fuel-containing gas flows into the fuel off-gas exhaust manifold 10G as fuel off-gas and flows from top to bottom through the fuel off-gas exhaust manifold 10G. Oxidant gas flows into a cathode side of each power-generating element 10A while passing from bottom to top through the oxidant gas intake manifold 10H. After passing through the cathode side along a cathode, the oxidant gas is released as oxidant off-gas from a lateral side of the body part without passing through a manifold.

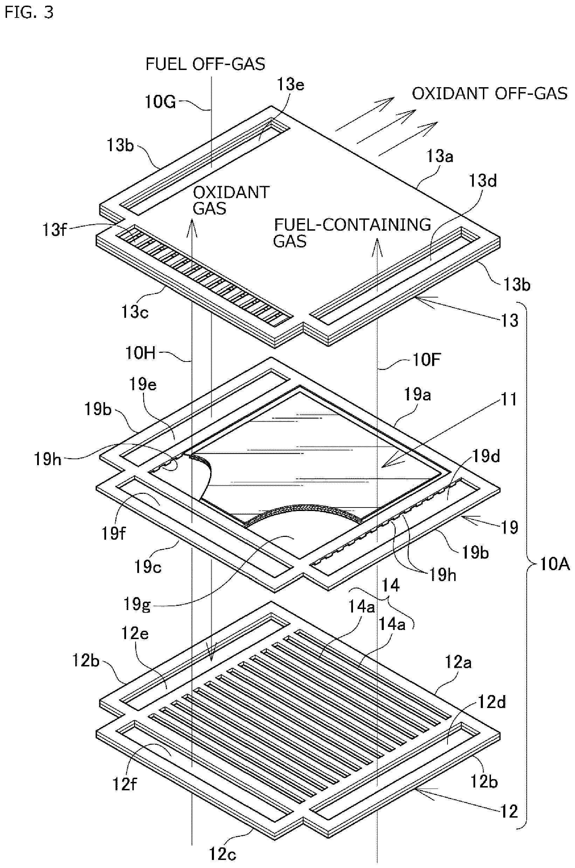

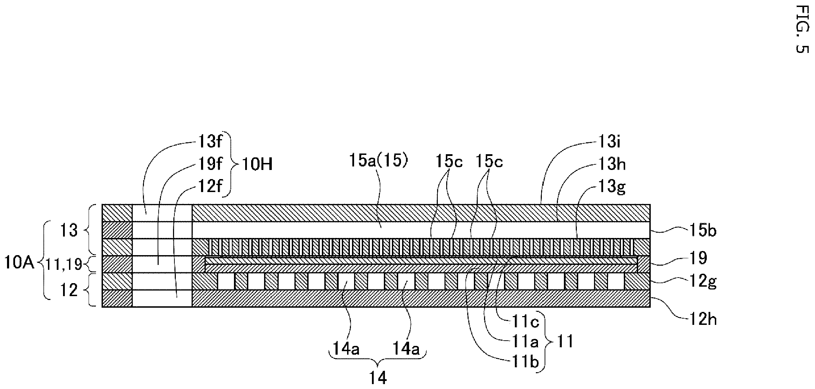

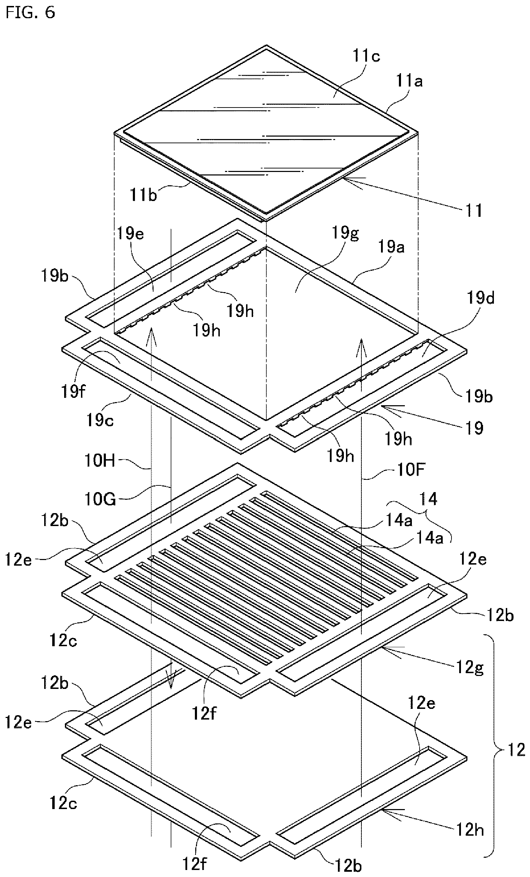

As shown in Fig. 3, each power-generating element 10A is a square-plate stack configured by stacking a flat plate-like anode plate 12 and a flat plate-like cathode plate 13 while holding a flat plate-like rectangular (here, regular square) cell 11 between central sections of the anode plate 12 and the cathode plate 13 and holding a flat plate-like and square-frame cell holder 19 between peripheral sections of the anode plate 12 and the cathode plate 13. As shown in Figs. 3 to 6, the cell 11 is a stack like a rectangular (here, regular square) thin plate having a flat plate-like solid oxide 11 a, an anode 11b connected to one surface (surface closer to the anode plate 12) of the solid oxide 11a, and a cathode 11c connected to an opposite surface (surface closer to the cathode plate 13) of the solid oxide 11a.

The cell holder 19 is formed of a plate made of metal such as stainless steel. As shown in Figs. 3 to 6, the cell holder 19 has a planar shape corresponding to the horizontal cross-sectional shape of the cell stack 10. More specifically, the cell holder 19 is formed of a rectangular (here, regular square) body part 19a corresponding to the quadrangular-columnar body part of the cell stack 10, two horizontally-long and flat rectangular first flange parts 19b projecting outwardly from two sides of the body part 19a facing each other to correspond to the first projecting parts 10D of the cell stack 10, and one horizontally-long and flat rectangular second flange part 19c projecting outwardly from one of the remaining two sides of the body part 19a to correspond to the second projecting part 10E of the cell stack 10.

For retention of the cell 11, the body part 19a of the cell holder 19 is provided with a rectangular (here, regular square) cell housing part 19g for housing of the cell 11 that is formed in a section of the body part 19a except a peripheral section thereof. A rectangular fuel-containing gas intake port 19d and a rectangular fuel off-gas exhaust port 19e, corresponding to the fuel-containing gas intake manifold 10F and the fuel off-gas exhaust manifold 10G of the cell stack 10 respectively, are provided at corresponding ones of the two first flange parts 19b of the cell holder 19. Likewise, a rectangular oxidant gas intake port 19f, corresponding to the oxidant gas intake manifold 10H of the cell stack 10, is provided at the one second flange part 19c. The thickness of the cell holder 19 is substantially the same as that of the cell 11.

The anode plate 12 has a planar shape corresponding to the horizontal cross-sectional shape of the cell stack 10. More specifically, the anode plate 12 is formed of a rectangular (here, regular square) body part 12a corresponding to the quadrangular-columnar body part of the cell stack 10, two horizontally-long and flat rectangular first flange parts 12b projecting outwardly from two sides of the body part 12a facing each other to correspond to the first projecting parts 10D of the cell stack 10, and one horizontally-long and flat rectangular second flange part 12c projecting outwardly from one of the remaining two sides of the body part 12a to correspond to the second projecting part 10E of the cell stack 10.

A rectangular fuel-containing gas intake port 12d and a rectangular fuel off-gas exhaust port 12e, corresponding to the fuel-containing gas intake manifold 10F and the fuel off-gas exhaust manifold 10G of the cell stack 10 respectively, are provided at corresponding ones of the two first flange parts 12b. Likewise, a rectangular oxidant gas intake port 12f, corresponding to the oxidant gas intake manifold 10H of the cell stack 10, is provided at the one second flange part 12c.

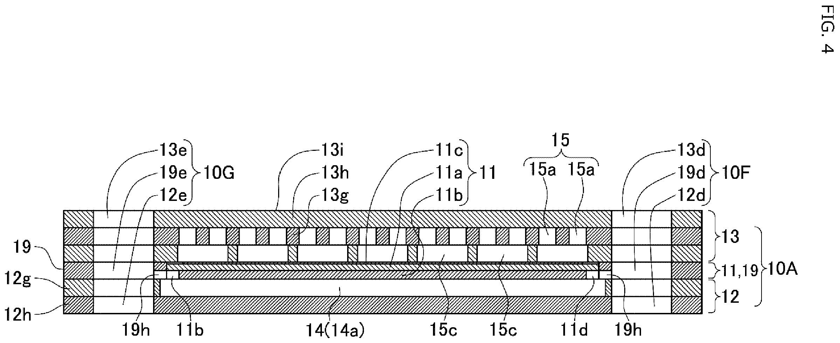

As shown in Figs. 4 to 6, the anode plate 12 is a stacked plate having a stack of two flat plate-like members made of a metallic material such as stainless steel. The two flat plate-like members include a slit plate 12g provided on a side contacting the power-generating element 10A, and a separator plate 12h provided on an opposite side. The slit plate 12g has a plurality of slits 14a provided in a part substantially corresponding to the body part 12a of the anode plate 12 and forming a fuel-containing gas channel 14 in this part. These slits 14a extend from one of the two first flange parts 12b toward the other of the first flange parts 12b and are arranged parallel to each other at a given pitch between the second flange part 12c and a side opposite the second flange part 12c.

Opposite end sides of each of the many slits 14a communicate with the fuel-containing gas intake port 12d and the fuel off-gas exhaust port 12e on corresponding ones of the opposite end sides of each slit 14a through a cutout part 11d formed at each corner of the cell 11 on the anode side of the cell 11 and on each of sides (on the side of the fuel-containing gas intake port 19d and on the side of the fuel off-gas exhaust port 19e) corresponding to the opposite end sides of each slit 14a, a shallow groove 19h formed at an anode-side surface of a rib section between the cell housing part 19g of the cell frame 19 and the fuel-containing gas intake port 19d, and a shallow groove 19h formed at an anode-side surface of a rib section between the cell housing part 19g of the cell frame 19 and the fuel off-gas exhaust port 19e.

As shown in Fig. 3, like the anode plate 12, the cathode plate 13 has a planar shape corresponding to the horizontal cross-sectional shape of the cell stack 10. More specifically, the cathode plate 13 is formed of a rectangular (here, regular square) body part 13a corresponding to the quadrangular-columnar body part of the cell stack 10, two horizontally-long and flat rectangular first flange parts 13b projecting outwardly from two sides of the body part 13a facing each other to correspond to the first projecting parts 10D of the cell stack 10, and one horizontally-long and flat rectangular second flange part 13c projecting outwardly from one of the remaining two sides of the body part 13a to correspond to the second projecting part 10E of the cell stack 10.

A rectangular fuel-containing gas intake port 13d and a rectangular fuel off-gas exhaust port 13e, corresponding to the fuel-containing gas intake manifold 10F and the fuel off-gas exhaust manifold 10G of the cell stack 10 respectively, are provided at corresponding ones of the two first flange parts 13b. Likewise, a rectangular oxidant gas intake port 13f, corresponding to the oxidant gas intake manifold 10H of the cell stack 10, is provided at the one second flange part 13c.

As shown in Figs. 3, 4, and 6, the cathode plate 13 is a stacked plate having a stack of three flat plate-like members made of a metallic material such as stainless steel. More specifically, the cathode plate 13 includes a second slit plate 13g, a first slit plate 13h, and a separator plate 13i stacked in this order from a side contacting the power-generating element 10A toward a side opposite the power-generating element 10A.

The first slit plate 13h has a plurality of slits 15a provided in a part corresponding to the body part 13a of the cathode plate 13 and forming an oxidant gas channel 15 in this part. These slits 15a extend from the second flange part 12c toward a side opposite the second flange part 12c and are arranged parallel to each other at a given pitch between the two first flange parts 12b. One end side of each slit 15a communicates with the oxidant gas intake port 13f in the second flange part 13c. An opposite end side of each of these slits 15a is opened to form an oxidant off-gas exhaust port 15b at a lateral end surface of the body part 13a (see Fig. 2).

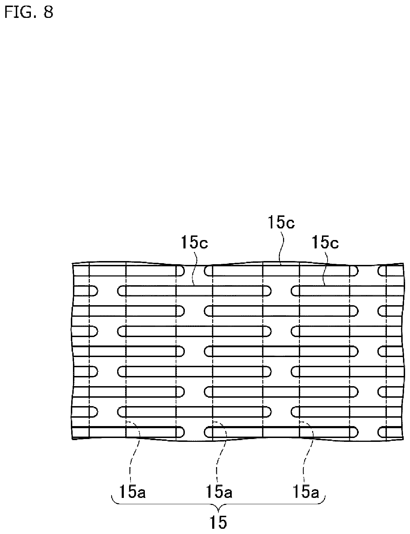

The second slit plate 13g has many short and thin mini-slits 15c provided in a part substantially corresponding to the body part 13a of the cathode plate 13 and extending in a direction crossing (here, perpendicular to) a gas passing direction (direction in which the slits 15a extend) in the oxidant gas channel 15. As shown in Fig. 8, the many mini-slits 15c are to form a gas channel in a direction crossing (here, perpendicular to) the gas passing direction (direction in which the slits 15a extend) in the oxidant gas channel 15. The mini-slits 15c are arranged densely in a staggered pattern in such a manner that each of the mini-slits 15c crosses a plurality of (here, two) parallel slits 15a. In this way, the second slit plate 13g having the many mini-slits 15c couples the plurality of slits 15a transversely in the direction of a parallel arrangement of the slits 15a while tightly contacting the cathode 11b of the cell 11.

While not shown in the drawings, an insulating plate like a thin plate for electrical insulation between the anode plate 12 and the cathode plate 13 is disposed between the cell holder 19 and the cathode plate 13. Further, a sealing member for physical interruption between the anode side and the cathode side of the cell element 11 is disposed at a position between the insulating plate and the cathode plate 13.

As described above, the cell stack 10 is configured by stacking the plurality of power-generating elements 10A repeatedly. Each of the power-generating elements 10A is configured by stacking the anode plate 12 and the cathode plate 13 while holding the cell 11 between the central sections of the anode plate 12 and the cathode plate 13, and holding the cell holder 19 between the peripheral sections of the anode plate 12 and the cathode plate 13.

In the power-generating element 10A of the aforementioned configuration, a cell-side surface of the anode plate 12 tightly contacts the anode 11b of the cell 11, while a cell-side surface of the cathode plate 13 tightly contacts the cathode 11c of the cell 11. The fuel-containing gas intake port 12d of the anode plate 12, the fuel-containing gas intake port 19d of the cell holder 19, and the fuel-containing gas intake port 13d of the cathode plate 13 function together to form the fuel-containing gas intake manifold 10F of the cell stack 10. Likewise, the fuel off-gas exhaust port 12e of the anode plate 12, the fuel off-gas exhaust port 19e of the cell holder 19, and the fuel off-gas exhaust port 13e of the cathode plate 13 function together to form the fuel off-gas exhaust manifold 10G of the cell stack 10. Further, the oxidant gas intake port 12f of the anode plate 12, the oxidant gas intake port 19f of the cell holder 19, and the oxidant gas intake port 13f of the cathode plate 13 function together to form the oxidant gas intake manifold 10H of the cell stack 10.

On the anode side of the cell 11 in each layer, the fuel-containing gas channel 14 extending from the fuel-containing gas intake manifold 10F to the fuel off-gas exhaust manifold 10G is formed along the anode 11b of the cell 11 by the plurality of slits 14a. On the cathode side of the cell 11, the fuel-containing gas channel 14 extending from the oxidant gas intake manifold 10H to the oxidant off-gas exhaust port 15b formed at the lateral end surface of the cathode plate 13 is formed along the cathode 11c of the cell 11 by the plurality of slits 13a.

The cell stack 10 of the aforementioned configuration has electrical series connection of the plurality of power-generating elements 10A. A quadrangular-columnar section of the cell stack 10 having a rectangular (here, regular square) horizontal cross section except a peripheral section of the square-columnar body part functions as a power-generating section 10B. This peripheral section, the two first projecting parts 10D, and the one second projecting part 10E function as a plate-stacked section 10C where the anode plate 12 and the cathode plate 13 are stacked alternately while the cell holder 19 is caught between the anode plate 12 and the cathode plate 13.

The separator plate 12h of the anode plate 12 and the separator plate 13i of the cathode plate 13 contact each other between adjacent two power-generating elements 10A. These plates are substantially the same plate members, so that the same two plate members are to overlap each other between the adjacent two power-generating elements 10A. Thus, one of these two plate members is generally omitted. Specifically, one plate member functions both as the separator plates 12h and 13i.

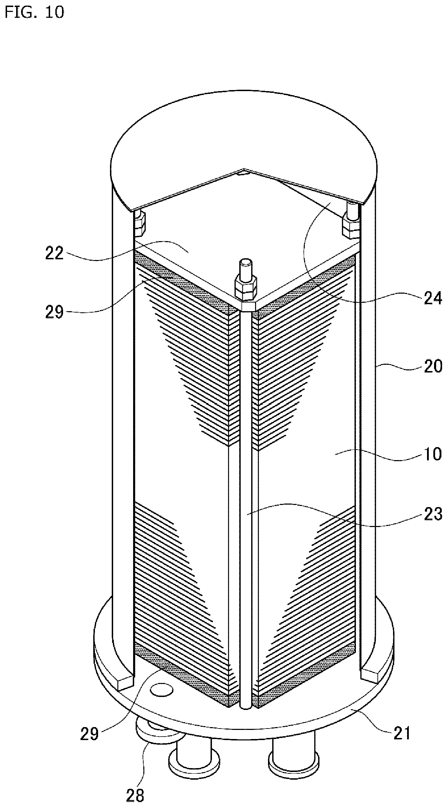

As shown in Fig. 10, the cell stack 10 of the aforementioned configuration is used while being housed in a stack cover 20. The stack cover 20 is a tubular body having an open bottom surface. The stack cover 20 and the cell stack 10 are fixed together on a round base plate 21. More specifically, the cell stack 10 is fixed with four fastening bolts 23 disposed at four corners of the cell stack 10 while an insulating member 29 is disposed between the cell stack 10 and the round base plate 21 as a lower end plate and between the cell stack 10 and an upper rectangular end plate 22. The stack cover 20 covering the cell stack 10 is fixed on the base plate 21 while space is ensured on an outer peripheral side and an upper side of the cell stack 10. In this way, the cell stack 10 is housed in the stack cover 21 and internal space of the stack cover 21 functions as stack housing space 24 for housing the cell stack 10.

The cell stack 10 housed in the stack cover 20 is closed by the end plate 22 at the respective upper ends of the fuel-containing gas intake manifold 10F, the fuel off-gas exhaust manifold 10G, and the oxidant gas intake manifold 10H. The respective lower ends of the fuel-containing gas intake manifold 10F, the fuel off-gas exhaust manifold 10G, and the oxidant gas intake manifold 10H communicate with the inside of a fuel-containing gas intake pipe 25, the inside of a fuel off-gas exhaust pipe 26, and the inside of an oxidant gas intake pipe 27 respectively projecting from the lower surface of the base plate 21 through a fuel-containing gas intake hole, a fuel off-gas exhaust hole, and an oxidant gas intake hole respectively formed at the base plate 21. The housing space 24 for the cell stack 10 communicates with the inside of an oxidant off-gas exhaust pipe 28 projecting from the lower surface of the base plate 21 through an oxidant off-gas exhaust hole 21 a formed at the base plate 21 so as not to interfere with the cell stack 10.

As such, fuel-containing gas flows into the fuel-containing gas intake manifold 10F in the cell stack 10 through the fuel-containing gas intake pipe 25 below the fuel-containing gas intake manifold 10F and then flows in a distributed manner into the fuel-containing gas channel 14 in the power-generating element 10A in each layer in the cell stack 10. Fuel off-gas released from the fuel-containing gas channel 14 in the power-generating element 10A in each layer flows out of the cell stack 10 from the fuel off-gas exhaust manifold 10G and through the fuel off-gas exhaust pipe 26 below the fuel off-gas exhaust manifold 10G.

Oxidant gas flows into the oxidant gas intake manifold 10H in the cell stack 10 through the oxidant gas intake pipe 27 below the oxidant gas intake manifold 10H and then flows in a distributed manner into the oxidant gas channel 15 in the power-generating element 10A in each layer in the cell stack 10. Oxidant off-gas flowing out from the oxidant gas channel 15 in the power-generating element 10A in each layer is released once into the stack housing space 24 in the stack cover 20 through a plurality of oxidant off-gas exhaust ports 13e formed at the lateral end surface of the cell stack 10. Then, the oxidant off-gas is released to the outside of the stack cover 20 through the oxidant off-gas exhaust pipe 28 below the stack housing space 24.

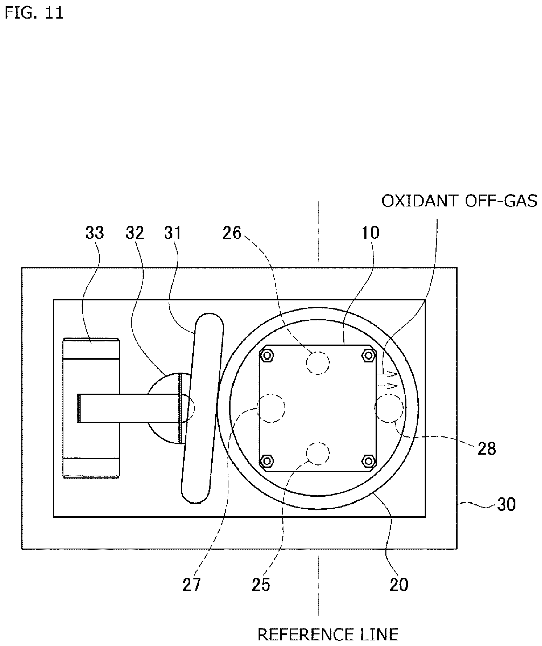

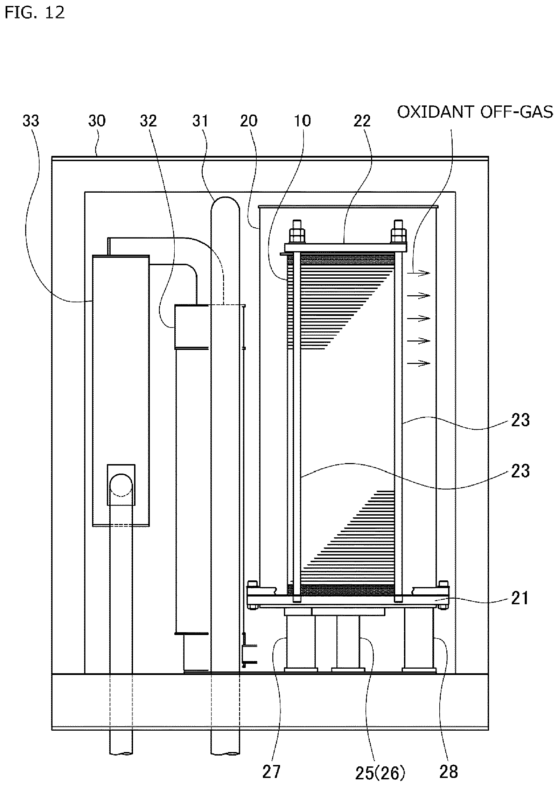

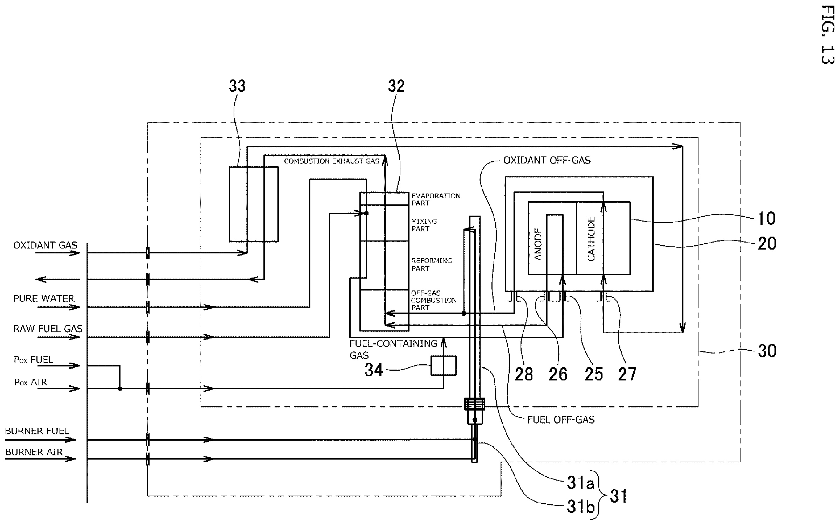

The fuel cell of this embodiment uses the aforementioned cell stack 10 as a principal part. As shown in Figs. 11 to 13, the fuel cell is configured as a heat-insulating module where the cell stack 10 housed in the aforementioned stack cover 20 and auxiliary units are housed together in a heat-insulating casing 30 with a lining made of a heat-insulating material. The auxiliary units include a radiant-tube burner 31 for preheating at the start of running, a reformer 32 that generates fuel-containing gas from raw fuel gas, a heat exchanger 33 for oxidant gas heating, and a partial oxidation reformer 34 used for preheating before running for power generation is started.

More specifically, the cell stack 10 is disposed in a standing posture in one lateral part of the heat-insulating casing 30 while being housed in the stack cover 20. The cell stack 10 in the stack cover 20 is disposed in such a manner that the oxidant gas intake manifold 10H is placed on an internal side and the lateral side where the oxidant off-gas exhaust port 15b is formed points toward an external side. The auxiliary units including the radiant-tube burner 31, the reformer 32, and the heat exchanger 33 are disposed in an opposite lateral part of the heat-insulating casing 30. In particular, the radiant-tube burner 31, the reformer 32, and the partial oxidation reformer 34 are disposed in standing postures to be directly next to the cell stack 10.

In this way, the auxiliary units including the radiant-tube burner 31, the reformer 32, the heat exchanger 33, and the partial oxidation reformer 34 are placed on a side different from the lateral side where the oxidant off-gas exhaust port 13e is formed with respect to a reference line perpendicular to a center line of the cell stack 10 and perpendicular to the gas passing direction in the oxidant gas channel 15. The center line of the cell stack 10 means a line passing through a center point of the cell stack 10 (more specifically, an intersection of diagonal lines of the quadrangular-columnar body part or cell section 10B of the cell stack 10) in the stacking direction.

The radiant-tube burner 31 is formed of an inverted U-shaped radiant tube 31a disposed in a standing posture on a bottom plate of the heat-insulating casing 30, and a burner body 31b connected to one end portion of the radiant tube 31a below the bottom plate of the heat-insulating casing 30. The radiant tube 31a is juxtaposed directly next to the cell stack 10 together with the reformer 32 so as to straddle the reformer 32 disposed in a standing posture next to the cell stack 10. The burner body 31b generates a mixture of preheating fuel gas and preheating air and causes combustion of the mixture. Further, the burner body 31b feeds combustion exhaust gas resulting from the combustion into the radiant tube 31a, thereby heating the reformer 32 disposed in a standing posture inside the radiant tube 31a and heating the cell stack 10 juxtaposed to the radiant tube 31 a, particularly the stack cover 20 covering the cell stack 10 with radiant heat. An opposite end portion of the radiant tube 31 a is opened as an exhaust port for combustion exhaust gas.

The reformer 32 juxtaposed to the cell stack 10 together with the radiant-tube burner 31 is a cylindrical body. The reformer 32 has a layer structure including an off-gas combustion part, a reforming part, a mixing part, and an evaporation part disposed in this order from below along the central axis of the reformer 32. The off-gas combustion part in the bottom layer causes combustion of fuel off-gas and oxidant off-gas released from the cell stack 10 and feeds resultant combustion exhaust gas to the reforming part, mixing part, and evaporation part above the off-gas combustion part, thereby heating these parts. In response to this heating, the evaporation part in the top layer generates steam by evaporating pure water supplied from outside. The mixing part next below the evaporation part generates mixture of raw fuel gas introduced from outside that is specifically city gas, etc. to become a raw material of fuel-containing gas and the steam generated by the evaporation part next above the mixing part. The reforming part next below the mixing part makes the mixture generated by the mixing part react with a catalyst for reforming at a high temperature, thereby reforming the mixture to hydrogen-rich fuel-containing gas. The hydrogen-rich fuel-containing gas generated by the reforming part is supplied to the anode side of the cell stack 10.

The heat exchanger 33 preheats oxidant gas to be supplied to the anode side of the cell stack 10 using combustion exhaust gas released from the reformer 32 as a heat source. The preheated oxidant gas is supplied to the cathode side of the cell stack 10. During preheating before running for power generation is started, the partial oxidation reformer 34 partially oxides mixture of POX fuel and POX air under a heated condition to generate hydrogen-rich partially-oxidized reformed gas and supplies the resultant reformed gas to the anode side of the cell stack 10.

A method of running and the function of the fuel cell of this embodiment are described next.

During start-up (preheating) before running for power generation is started, preheating fuel gas and preheating air are supplied to the burner body 31b of the radiant-tube burner 31 in the heat-insulating casing 30 to cause combustion, thereby heating the radiant tube 31a. Combustion exhaust gas (burner exhaust gas) released from the radiant tube 31a passes through the reformer 32 and the heat exchanger 33 and is then released to the outside. Heating the radiant tube 31 a generates radiant heat from the radiant tube 31. The stack cover 20, the cell stack 10 in the stack cover 20, and the reformer 32, the heat exchanger 33, and the partial oxidation reformer 34 outside the stack cover 20 are heated from outside with this radiant heat. The reformer 32 and the heat exchanger 33 are heated from inside with the combustion exhaust gas (burner exhaust gas) released from the radiant tube 31a. In this way, the cell stack 10 in the stack cover 20, and the reformer 32, the heat exchanger 33, and the partial oxidation reformer 34 outside the stack cover 20 are preheated.

Mixture of POX fuel and POX air is supplied to the preheated partial oxidation reformer 34 to generate hydrogen-rich partially-oxidized reformed gas. The generated partially-oxidized reformed gas is supplied to the anode side of he cell stack 10 to prevent oxidation of the anode side during the preheating.

During running for power generation, raw fuel gas such as city gas as a raw material of fuel-containing gas is supplied to the mixing part of the reformer 32. Oxidant gas (here, air) is supplied as a medium to be heated to the heat exchanger 33. Further, pure water is supplied to the evaporation part of the reformer 32. In the cell stack 10, as a result of power-generating reaction, fuel off-gas (unburned fuel-containing gas) is released from the fuel off-gas exhaust manifold 16 and this fuel off-gas is released to the outside of the stack cover 20 through the fuel off-gas exhaust pipe 26. Meanwhile, oxidant off-gas (unburned oxidant gas) is released from the oxidant off-gas exhaust port 13e of the cell stack 10. The released oxidant off-gas passes through the stack housing space 24 in the stack cover 20 and is then released to the outside of the stack cover 20 through the oxidant off-gas exhaust pipe 28. The fuel off-gas released to the outside of the stack cover 20 through the fuel off-gas exhaust pipe 26 and the oxidant off-gas released to the outside of the stack cover 20 through the oxidant off-gas exhaust pipe 28 are fed to the off-gas combustion part of the reformer 32 to cause combustion. Combustion exhaust gas resulting from the combustion passes through the reforming part, the mixing part, and the evaporation part of the reformer 32, thereby heating these parts.

In this state, pure water is supplied to the evaporation part of the reformer 32 to generate steam. The generated steam is mixed with raw fuel gas such as city gas as a raw material of fuel-containing gas at the mixing part and resultant mixture is fed to the reforming part next below the mixing part. As a result, this mixture is reformed to hydrogen-rich fuel-containing gas. The hydrogen-rich fuel-containing gas generated by the reforming part of the reformer 32 flows from the fuel-containing gas intake pipe 25 into the fuel-containing gas intake manifold 15 of the cell stack 10. The oxidant gas (air) supplied as the medium to be heated to the heat exchanger 33 is preheated by heat exchange with the combustion exhaust gas supplied from the reformer 32. The preheated oxidant gas flows from the oxidant gas intake pipe 27 into the oxidant gas intake manifold 10H of the cell stack 10. The fuel-containing gas having flowed into the fuel-containing gas intake manifold 15 passes through the fuel-containing gas channel 14 in the power-generating element 10A in each layer. The oxidant gas having flowed into the oxidant gas intake manifold 10H passes through the oxidant gas channel 15 in the power-generating element 10A in each layer. In this way, power-generating reaction occurs in the power-generating element 10A in each layer.

In response to the power-generating reaction, fuel off-gas (unburned fuel-containing gas) is released from the fuel-containing gas channel 14 in the power-generating element 10A in each layer. Meanwhile, oxidant off-gas (unburned oxidant gas) is released from the oxidant gas channel 15 in the power-generating element 10A in each layer. The fuel off-gas released from the fuel-containing gas channel 14 in the power-generating element 10A in each layer gathers temporarily at the fuel off-gas exhaust manifold 10G, passes through the fuel off-gas exhaust pipe 26, and is then released to the outside of the stack cover 20. Meanwhile, the oxidant off-gas released from the oxidant gas channel 15 in the power-generating element 10A in each layer does not pass through a manifold but it is released directly into the stack housing space 24 in the stack cover 20 through the oxidant off-gas exhaust port 15b formed at the one lateral side of the body part of the cell stack 10. The released oxidant off-gas passes through the stack housing space 24 and is released to the outside of the stack cover 20 from the oxidant off-gas exhaust pipe 28.

As described above, the fuel off-gas released to the outside of the stack cover 20 from the fuel off-gas exhaust pipe 26 after passing through the fuel off-gas exhaust manifold 10G, and the oxidant off-gas released to the outside of the stack cover 20 from the oxidant off-gas exhaust pipe 28 after passing through the stack housing space 24 in the stack cover 20 without passing through a manifold, are fed to the off-gas combustion part of the reformer 32 to cause combustion.

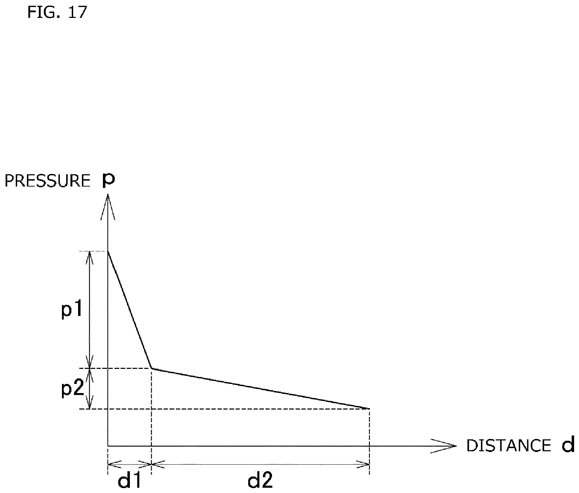

The volume of the stack housing space 24 in the stack cover 20, even when determined by subtracting the volume of space occupied by the cell stack 10, is still considerably larger than the volume of each of the manifolds 10F, 10G, and 10H in the cell stack 10. This makes gas flow resistance in the stack housing space 24 considerably lower than that in each of the manifolds 10F, 10G, and 10H in the cell stack 10. As a result, as shown in Fig. 17, pressure change observed in the passing direction of the oxidant gas is determined as a sum of pressure loss p1 occurring in a distance d1 from the oxidant gas intake manifold 10H to an inlet of the oxidant gas channel 15 and pressure loss p2 occurring in a distance d2 from the inlet to an outlet of the oxidant gas channel 15 (p1 + p2).

Compared to pressure loss (p1 + p2 + p3) occurring in the conventional case (Fig. 16) in the presence of the oxidant off-gas exhaust manifold 19 on the outlet side of the oxidant gas channel 15, this pressure loss (p1 + p2) is reduced by pressure loss (p3) resulting from the oxidant off-gas exhaust manifold 19. Thus, even if a gas seal of the cell stack is formed by using a glass seal member of not so high pressure resistance of about some kilopascals, risk of gas leakage due to the level of oxidant gas pressure and risk of resultant destructive damage can still be reduced effectively.

During running for power generation, the reformer 32 causes combustion of off-gas. Thus, the reformer 32 becomes a heat-generating member to heat the stack cover 20 from outside. Meanwhile, oxidant off-gas released from the oxidant off-gas exhaust port 13e formed at the lateral side of the cell stack 10 into the stack housing space 24 in the stack cover 20 is at a considerably high temperature of some hundreds of degrees Celsius or more. This heats the stack cover 20 from the inside of the stack cover 20 mainly in a part facing the cell lateral side where the oxidant off-gas exhaust port 13e is formed.

If a part of the stack cover 20 where the stack cover 20 is heated from inside and a part of the stack cover 20 where the stack cover 20 is heated from outside overlap each other, imbalance may be caused in a heating distribution of the stack cover 20. This results in risk of breakage of the stack cover 20. In this regard, in the fuel cell of this embodiment, the reformer 32 is placed on a side opposite the lateral side where the oxide off-gas exhaust port 15b is formed with respect to the reference line perpendicular to the center line of the cell stack 10 and perpendicular to the gas passing direction in the oxidant gas channel 15. More precisely, the reformer 32 and the lateral side where the oxidant off-gas exhaust port 15b is formed are in exactly opposite positions with respect to the reference line. Thus, a uniform temperature distribution of the stack cover 20 is achieved and the reformer 32 functions as an effective heating source for the stack cover 20.

In each power-generating element 10A in the cell stack 10, the opposite end sides of each of the plurality of slits 14a forming the fuel-containing gas channel 14 communicate with the fuel-containing gas intake manifold 10F and the fuel off-gas exhaust manifold 10G on these opposite end sides not directly but indirectly through the cutout part 11d formed on each of opposite sides of the cell 11 in the fuel-containing gas passing direction and through the plurality of shallow grooves 19h formed at each of opposite lateral portions of the cell frame 19 in the fuel-containing gas passing direction.

The plurality of grooves 19h functions as a fuel-containing gas inlet that makes the fuel-containing gas intake manifold 10F and the cell housing part 19g of the cell holder 19 communicate with each other, and as a fuel off-gas outlet that makes the cell housing part 19g of the cell holder 19 and the fuel off-gas exhaust manifold 10g communicate with each other. Specifically, fuel-containing gas in the fuel-containing gas intake manifold 10F flows into the cell housing part 19g of the cell holder 19 through the plurality of grooves 19h on an upstream side functioning as the fuel-containing gas inlet. Fuel off-gas in the cell housing part 19g of the cell holder 19 flows into the fuel off-gas exhaust manifold 10G through the plurality of grooves 19h on a downstream side functioning as the fuel off-gas projecting port. Thus, a rib between adjacent slits 14a is removed from the fuel-containing gas intake manifold 10F and the fuel off-gas exhaust manifold 10G. As a result, gas flow resistance is reduced in the fuel-containing gas intake manifold 10F and the fuel off-gas exhaust manifold 10G.

Additionally, on an upstream side of the gas passing direction in the fuel-containing gas channel 14, fuel-containing gas in the fuel-containing gas intake manifold 10F passes through the plurality of grooves 10h as the fuel-containing gas inlet and then flows into the cutout part 11d of the cell 11. The cutout part 11d of the cell 11 is formed by retreating an end surface of the cell 11 (here, an end surface of the anode 10b) facing the plurality of grooves 10h and extends continuously in a direction of parallel arrangement of the plurality of grooves 10h and the slits 14a (crosswise direction). Thus, the fuel-containing gas having flowed from the plurality of grooves 10h into the cell housing part 19g of the cell holder 19 collides with the end surface of the cell 11 (here, the end surface of the anode 10b) to be distributed in the crosswise direction in the cutout part 11d. In this way, the fuel-containing gas flows in a uniformly distributed manner into the plurality of slits 14a. The end surface of the cell 11 (here, the end surface of the anode 10b) functions as a gas regulating part and space inside the cutout part 11d functions as buffer space.

On the upstream side of the gas passing direction in the fuel-containing gas channel 14, fuel off-gas flowing out of the plurality of slits 14a passes through the space inside the cutout part 11d on a downstream side. In this way, the fuel off-gas smoothly flows into the plurality of grooves 19h on a downstream side functioning as the fuel off-gas outlet.

Regarding the oxidant gas channel 15, the second slit plate 13g is disposed on a side of the plurality of slits 15a forming the oxidant gas channel 15 closer to the cell 11. The second slit plate 13g has the many short and thin mini-slits 15c extending in a direction crossing (here, perpendicular to) the gas passing direction in the oxidant gas channel 15. The many slits 15c couple the plurality of slits 15a transversely in the direction of parallel arrangement of the slits 15a. This removes a difference in gas pressure among the plurality of slits 15a. The second slit plate 13g functions to increase an area of contact with the cathode 11c of the cell 11 and to supply oxidant gas to the cathode 11c efficiently through the many mini-slits 15c. Specifically, the second slit plate 13g contributes to enhancement of power-generating efficiency in terms of properly distributed supply of oxidant gas, reduction in pressure loss, and reduction in electrical resistance by using the many mini-slits 15c.

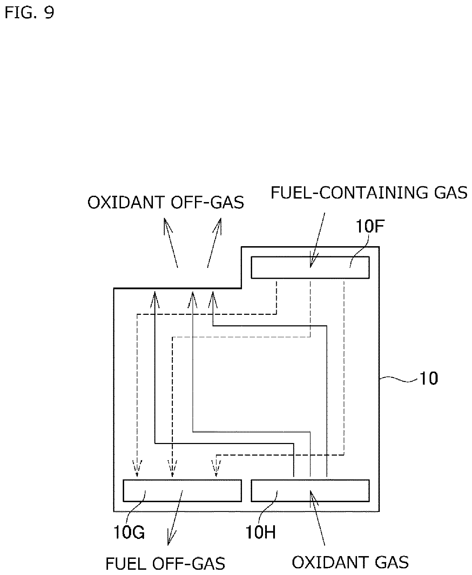

The cell stack 10 used in the aforementioned embodiment employs a perpendicular-flow system. As shown in Fig. 9, the cell stack 10 employing a counterflow system is also applicable. The cell stack 10 employing the counterflow system shown in Fig. 9 has a rectangular horizontal cross-sectional shape and one of two sides of the cell stack 10 facing each other is provided with the fuel off-gas exhaust manifold 10G and the oxidant gas intake manifold 10H formed integrally and arranged side by side. A half portion of the other of the two sides is provided with the fuel-containing gas intake manifold 10F formed integrally. The remaining portion of this side is not provided with such an integrated manifold. In this remaining portion, a lateral side of a body part where the oxidant off-gas exhaust port 15b is formed is exposed in the stack housing space.

### Reference Signs List

- 10: Cell stack
- 10A: Power-generating element
- 10B: Power-generating section
- 10C: Plate-stacked section
- 10D: First projecting part
- 10E: Second projecting part
- 10F: Fuel-containing gas intake manifold
- 10G: Fuel off-gas exhaust manifold
- 10H: Oxidant gas intake manifold
- 10J: Oxidant off-gas exhaust manifold
- 11: Cell
- 11b: Solid Oxide
- 11b: Anode
- 11c: Cathode
- 11d: Cutout part
- 12: Anode plate
- 12a: Body part
- 12b: First flange part
- 12c: Second flange part
- 12d: Fuel-containing gas intake port
- 12e: Fuel off-gas exhaust port
- 12f: Oxidant gas intake port
- 12g: Slit plate
- 12h: Separator plate
- 13: Cathode plate
- 13a: Body part
- 13b: First flange part
- 13c: Second flange part
- 13d: Fuel-containing gas intake port
- 13e: Fuel off-gas exhaust port
- 13f: Oxidant gas intake port
- 13g: Second slit plate
- 13h: First slit plate
- 13i: Separator plate
- 14: Fuel-containing gas channel
- 14a: Slit
- 15: Oxidant gas channel
- 15a: Slit
- 15b: Oxidant off-gas exhaust port
- 15c: Mini-slit
- 19: Cell holder
- 19a: Body part
- 19b: First flange part
- 19c: Second flange part
- 19d: Fuel-containing gas intake port
- 19e: Fuel off-gas exhaust port
- 19f: Oxidant gas intake port
- 19g: Cell housing part
- 19h: Groove
- 20: Stack cover
- 21: Base plate
- 22: End plate
- 23: Fastening bolt
- 24: Stack housing space
- 25: Fuel-containing gas intake pipe
- 26: Fuel off-gas exhaust pipe
- 27: Oxidant gas intake pipe
- 28: Oxidant off-gas exhaust pipe
- 29: Insulating member
- 30: Heat-insulating casing
- 31: Radiant-tube burner
- 31 a: Radiant tube
- 31b: Burner body
- 32: Reformer
- 33: Heat exchanger
- 34: Partial oxidation reformer

## Claims

1. A fuel cell comprising a cell stack configured by stacking a flat plate-like anode plate and a flat plate-like cathode plate alternately while holding a cell between central sections of the anode plate and the cathode plate, and holding a flat plate-like cell holder between peripheral sections of the anode plate and the cathode plate, the cell having a rectangular flat plate-like shape with one main surface to which an anode is connected and an opposite main surface to which a cathode is connected, wherein
a fuel-containing gas channel and an oxidant gas channel are formed on an anode side and a cathode side respectively of each cell, the fuel-containing gas channel being formed for passing fuel-containing gas along the anode of each cell in the cell stack, the oxidant gas channel being formed for passing oxidant gas along the cathode of each cell in the cell stack,
a manifold is formed at each of an upstream side of the fuel-containing gas channel, a downstream side of the fuel-containing gas channel, and an upstream side of the oxidant gas channel to form a manifold-integrated structure,
the manifold on the upstream side of the fuel-containing gas channel is a fuel-containing gas intake manifold that penetrates a plate-stacked section in a stacking direction where the anode plate and the cathode plate are stacked while an insulating plate is caught between the anode plate and the cathode plate and communicates with an upstream end of each fuel-containing gas channel in the cell stack,
the manifold on the downstream side of the fuel-containing gas channel is a fuel off-gas exhaust manifold that penetrates the plate-stacked section in the stacking direction and communicates with a downstream end of each fuel-containing gas channel in the cell stack,
the manifold on the upstream side of the oxidant gas channel is an oxidant gas intake manifold that penetrates the plate-stacked section in the stacking direction and communicates with an upstream end of each oxidant gas channel in the cell stack, and
a downstream side of the oxidant gas channel in each cell has an open structure in which a downstream end of each oxidant gas channel in the cell stack is opened as an oxidant off-gas exhaust port at an outer peripheral surface of the cell stack and oxidant off-gas is released directly to the outside of the cell stack through the downstream end of the oxidant gas channel.

2. The fuel cell according to claim 1, wherein
the oxidant off-gas exhaust port formed at the outer peripheral surface of the cell stack contacts a stack housing space housing the cell stack and through which the oxidant off-gas is released directly into the stack housing space from the downstream end of the oxidant gas channel.

3. The fuel cell according to claim 2, wherein
the cell stack is disposed in a stack cover covering the cell stack, and
internal space of the stack cover functions as the stack housing space.

4. The fuel according to any one of claims 1 to 3, wherein
the fuel-containing channel is formed to extend from one side toward a side facing the one side of each cell and the oxidant gas channel is formed to extend from one of the remaining two sides toward a side facing the one of the remaining two sides of the each cell, thereby making a gas passing direction in the fuel-containing gas channel and a gas passing direction in the oxidant gas channel cross each other.

5. The fuel cell according to claim 4, wherein
in a view of the cell stack taken from above and from one end side of the stacking direction, the cell stack is formed into a rectangular shape corresponding to the shape of the cell in the cell stack,
the fuel-containing gas intake manifold, the fuel off-gas exhaust manifold, and the oxidant gas intake manifold are formed at corresponding three sides of the rectangular shape, and
the oxidant off-gas exhaust port is formed at a lateral side of the remaining one side of the rectangular shape.

6. The fuel cell according to any one of claims 2 to 5, comprising a reformer that is disposed outside the stack housing space and generates hydrogen-rich fuel-containing gas from raw fuel gas.

7. The fuel cell according to claim 6, wherein
the reformer functions as an off-gas combustor that causes combustion of mixture of fuel off-gas released from the fuel off-gas exhaust manifold and the oxidant off-gas released from the stack housing space, and
combustion exhaust gas released from the off-gas combustor is used as a heating medium in the reformer.

8. The fuel cell according to claim 7 or 8, wherein
the reformer is disposed in the vicinity of the stack cover.

9. The fuel cell according to any one of claims 6 to 8, wherein
the reformer is placed on a side different from a side where the oxidant off-gas exhaust port is formed with respect to a reference line perpendicular to a center line passing through the center of the cell stack in the stacking direction and perpendicular to a gas passing direction in the oxidant gas channel.
